# EUROPEAN PATENT APPLICATION

(11) **EP 1 220 120 A2**
(43) Date of publication of application: **03.07.2002**
(21) Application number: 02000102.0
(22) Date of filing: 02.01.2002
(51) Int. Cl.: G06F 17/30

(54) **Change tracking integrated with disconnected device document synchronization**

(30) Priority: 02.01.2001 US 754411
(71) Applicant: SUN MICROSYSTEMS, INC., Palo Alto, California 94303 (US)
(72) Inventor: BERGMAN, Eric D., Palo Alto, California 94301 (US); RANK, Paul J., San Jose, California 95124 (US)
(74) Representative: HOFFMANN - EITLE

(57) **Abstract**

The present invention provides change tracking integrated into disconnected device document synchronization. In one embodiment of the present invention, changes made on the disconnected device are tracked, for instance by the use of change tracking mechanisms that either exist in the companion disconnected device software or are added in addition to the disconnected device software. When the document is transferred back to a general purpose computer, the tracked changes are transferred back as well. In this way, the document, when it is edited on the general purpose computer will reveal exactly what changes were made while the document was on the disconnected device.

## Description

### BACKGROUND OF THE INVENTION

### FIELD OF THE INVENTION

The present invention relates to change tracking, and in particular to change tracking integrated with disconnected device document synchronization.

Portions of the disclosure of this patent document contain material that is subject to copyright protection. The copyright owner has no objection to the facsimile reproduction by anyone of the patent document or the patent disclosure as it appears in the Patent and Trademark Office file or records, but otherwise reserves all copyright rights whatsoever.

### BACKGROUND ART

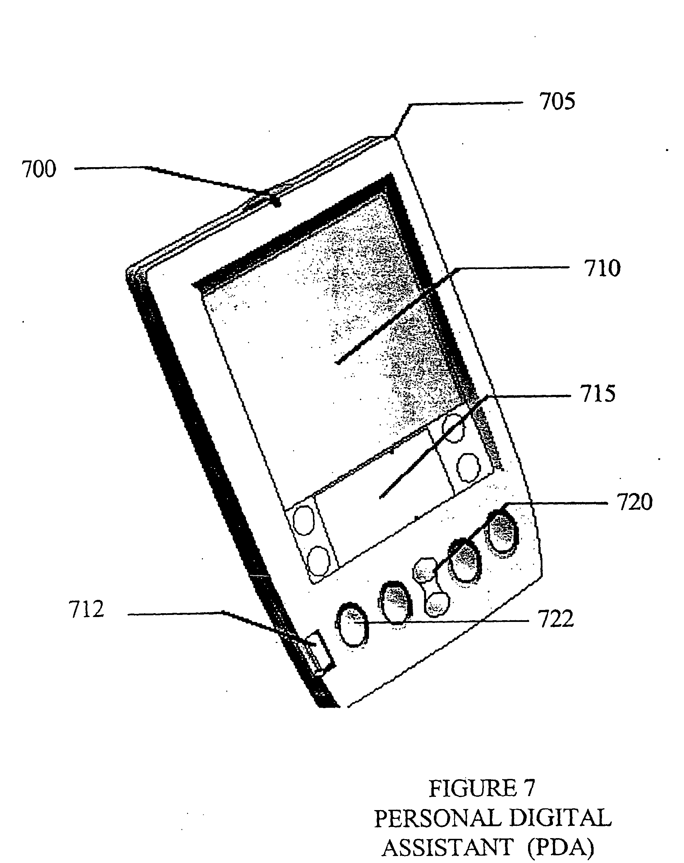

A disconnected device is a portable electronic device that allows a user to perform computations at any location. Disconnected devices include, for instance, mobile phones and personal digital assistants (PDAs). A PDA is a small computer-like device. An example of one type of PDA is shown in Figure 7. PDA 700 has a base housing 705 usually with input mechanisms mounted on its top side, and a miniature display screen 710 for output. The output may take the form of graphic and/or textual images presented to the user on the display screen, or optionally the output may be presented in the form of sound.

PDA 700 can be activated and de-activated, for instance, by accessing power button 712. The input mechanism may be, for example, a miniature keyboard, or alternatively the display screen may act as both an input and output mechanism with a pen-like stylus or other writing implement (not shown) used to introduce input by way of the screen. With reference to Figure 7, bottom portion 715 of display screen 710 is where the pen-like stylus would introduce user input. Shown in Figure 7 are additional mechanisms for user input as well, including scroll button 720 and application button 722. A small microprocessor, limited data storage and memory areas, and a storage battery are typically mounted within the base housing 705 of the PDA along with various other miniature electronic components.

The increasing popularity of PDA's stems from both their relatively low cost and extreme portability compared to, for example, much larger general purpose computers. Many users find that for simple computing tasks during trips and other periods of being away from their larger computer devices, the bulk and computing power of even a compact notebook computer are simply not needed.

For extended use periods and more complex computing tasks, however, it is recognized that larger computer devices, such as notebook and desktop computers, are considerably more suitable than the diminutive PDA device. Accordingly, when a user's trip is completed the user typically desires to transfer the work they have performed from the PDA to the general purpose computer.

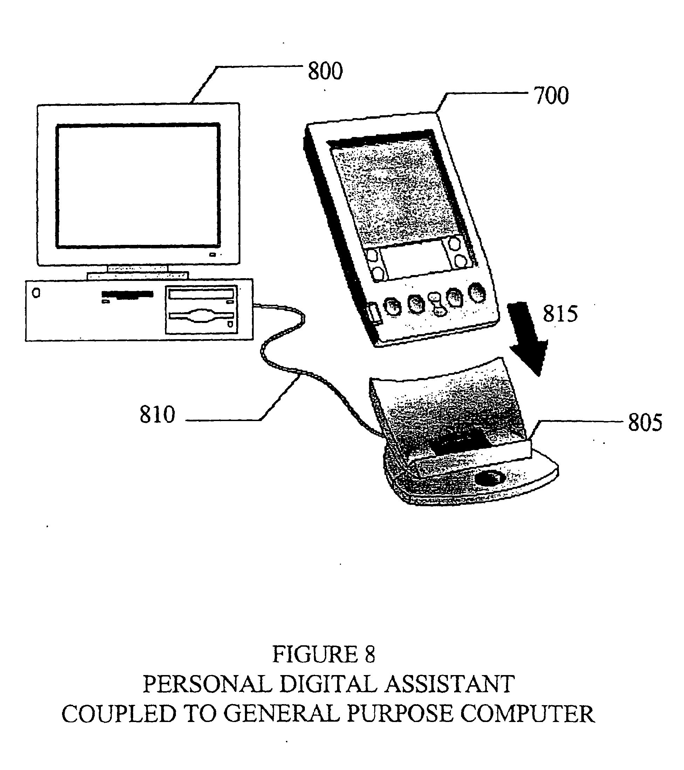

Figure 8 is designed to generally indicate how a user would transfer their work from PDA 700 to a general purpose computer. General purpose computer 800 is coupled to PDA carriage 805 via line 810. Line 810 may be, for example, an electrical line, an optical line, a wireless connection, or any other type of connection capable of transmitting data between a plurality of digital devices. In operation, a user would insert PDA 700 into carriage 805 in the direction generally indicated by arrow 815. Thereafter, data can be passed bi-directionally across line 810 to achieve the result of either transferring the user's work from PDA 700 to general purpose computer 800 or transferring work from general purpose computer 800 to PDA 700.

Understanding that users desire to transfer work between a disconnected device, such as the PDA, and a general purpose computer, many software companies have created software that runs on a disconnected device and is an abbreviated companion version to the more robust software that runs on the general purpose computer. One example of such software is Star Office™, a comprehensive office productivity application that is available from Sun Microsystems of Palo Alto, California (Star Office™ is a trademark of Sun Microsystems). Star Office is a software package that has a word processor, a spreadsheet, a drawing program, and other functions. Companion software called the Star Office Mobile Edition™ is designed to run on a disconnected device, such as a PDA.

Because PDAs and other disconnected devices have limited amounts of memory and small display screens, it is not possible for the companion software to support all of the fonts, font attributes, and paragraph styles that exist in the software designed for the general purpose computer. This creates problems when documents are transferred between the disconnected device and general purpose computer. For instance, changes made to a document on the disconnected device may not be visible to the user until the document is transferred from the disconnected device to the general purpose computer. Likewise, the format for the changes made to a document on the disconnected device may not be able to be set until the document is transferred to the general purpose computer.

### TRANSFERRING FROM A DISCONNECTED DEVICE TO A GENERAL PURPOSE COMPUTER

Problems exist when a document is transferred from a disconnected device to a general purpose computer. Edited text cannot be viewed on the disconnected device in "what you see is what you get" (WYSIWYG) form. Thus, any changes made on the disconnected device must be confirmed on the general purpose computer.

For example, a user might create a new bullet item that they want in a very specific font and size. Assume that the style for the bullet item is not available or viewable on the disconnected device. In this case, the user can edit the content of the document and add the bullet item on the disconnected device, but in order to confirm that the font and size are correct, they will have to synchronize the disconnected device with the general purpose computer and open the document on the general purpose computer using its version of the software and then prepare the appropriate formatting for the bullet item. This approach is problematic because often the user forgets the changes they made on the disconnected device or the formatting they wanted.

### TRANSFERRING TO A DISCONNECTED DEVICE FROM A GENERAL PURPOSE COMPUTER

Transferring to a disconnected device from a general purpose computer often results in a loss of information. For instance, when the document is transferred to the disconnected device, format information is often lost.

One current scheme to correct this problem is to force the user to save two separate documents. Using this scheme, the user will retain a copy of the document before it was transferred to the disconnected device and a copy of the document after it was edited and transferred back from the disconnected device. Thus, now the user has to manage two documents. The original document has all of the correct formatting. The second document has the correct content, in that the edited text will appear in this document, however, this document may have lost information from the general purpose computer to disconnected device transfer. Reconciling the two documents is a difficult and time consuming task, which makes this current scheme disadvantageous.

### SUMMARY OF THE INVENTION

It is an object of the invention to provide an improved handling of changes in documents.

This object of the invention is solved by a method for integrating change tracking with disconnected device document synchronization comprising: creating an original document on a computer; transferring said original document to a disconnected device; modifying said original document on said disconnected device to form a modified document; returning said modified document to said computer; and determining one or more modifications between said original document and said modified document.

The step of determining may further comprise utilizing change tracking software and/or utilizing a data translation operation.

The disconnected device may be a PDA.

It may further be determined whether to integrate said modifications into said original document. Further, the original document and said modified document may be merged.

Still further, the original document may be created using an office productivity application, and/or the document may be modified using a companion application.

The object of the invention is further solved by a change tracker comprising: an original document configured to be created on a computer and transferred to a disconnected device; a modified document comprising said original document modified on said disconnected device and returned to said computer; and a change tracker configured to determine one or more modifications between said original document and said modified document.

The object of the invention is further solved by a computer program product may comprise: a computer usable medium having computer readable program code embodied therein configured to integrate change tracking with disconnected device document synchronization, said computer program product comprising: computer readable code configured to cause a computer to create an original document; computer readable code configured to cause a computer to transfer aid original document to a disconnected device; computer readable code configured to cause a computer to modify said original document on said disconnected device to form a modified document; computer readable code configured to cause a computer to return said modified document to said computer; and computer readable code configured to cause a computer to determine one or more modifications between said original document and said modified document.

The present invention provides change tracking integrated into disconnected device document synchronization. In one embodiment of the present invention, changes made on the disconnected device are tracked, for instance by the use of change tracking mechanisms that either exist in the companion disconnected device software or are added in addition to the disconnected device software. When the document is transferred back to a general purpose computer, the tracked changes are transferred back as well. In this way, the document, when it is edited on the general purpose computer, will reveal exactly what changes were made while the document was on the disconnected device.

Thus, a user can both confirm the changes made on the disconnected device and can confirm that information or formatting was not lost when transferred to the disconnected device. In one embodiment, data transfer and data translation operations are employed which couples disparate protocols that may exist between the change tracking mechanisms in the disconnected device software and the change tracking mechanisms in the general purpose computer software.

In one embodiment, built in change tracking tags that exist in some software suitable for use with the present invention are used. In another embodiment, a merge feature that exists in some software suitable for use with the present invention is used in conjunction with change tracking. In this embodiment, a copy of the original document is retained on the general purpose computer and then merged with the new document that was edited on the disconnected device. The merged document retains any features that were lost in the initial transfer, a large graphic file, for instance. In addition, the new document displays both the edited text in a traditional manner used by a change tracker and new formatting that was not able to be viewed as WYSIWYG on the disconnected device.

By using the merge feature in conjunction with change tracking, the present invention overcomes both the problem associated with lost content when a document is transferred to the disconnected device and the problem associated with not being able to view the changes made on the disconnected device exactly as they will appear when the document is transferred back to the general purpose computer. In another embodiment, the user is given the option of whether to incorporate the changes shown in the merged document or to reject the changes and make additional changes of their own.

### BRIEF DESCRIPTION OF THE DRAWINGS

These and other features, aspects and advantages of the present invention will become better understood with regard to the following description, appended claims and accompanying drawings where:
- Fig. 1A: is an example of the text in an original document.
- Fig. 1B: is an example of the text of a modified document.
- Fig. 1C: is an example of the appearance of a change tracking document that compares Fig. 1A to Fig. 1B.
- Fig. 1D: is an example of the appearance of a change tracking document where additional text has been added.
- Fig. 1E: is an example of the appearance of a final document.
- Fig. 2: illustrates change tracking integrated with disconnected device document synchronization according to an embodiment of the present invention.
- Fig. 3: illustrates the use of data transfer and translation operations according to an embodiment of the present invention.
- Fig. 4: illustrates the use of a merge feature according to an embodiment of the present invention.
- Fig. 5: illustrates the use of a user selection feature according to an embodiment of the present invention.
- Fig. 6: is an illustration of an embodiment of a general purpose computer upon which one or more embodiments of the present invention can be implemented.
- Fig. 7: is an illustration of an embodiment of a PDA.
- Fig. 8: is an illustration of an embodiment of a PDA coupled to a general purpose computer.
- Fig. 9: illustrates the use of data transfer and translation operations combined with a merge feature according to an embodiment of the present invention.

### DETAILED DESCRIPTION

In the following description, numerous specific details are set forth to provide a more thorough description of embodiments of the invention. It is apparent, however, to one skilled in the art, that the invention may be practiced without these specific details. In other instances, well known features have not been described in detail so as not to obscure the invention.

### CHANGE TRACKING

The notion of change tracking refers to the ability to monitor the changes that have occurred in a document. When a user edits a document, certain text is deleted, moved, added, etc. Change tracking software is designed to compare the text in the older version of the document to the text in the newer version. Upon comparison, the change tracking software identifies what is different and stores information with the document that highlights the changes from the original document.

For instance, assume an original document contained the sentence "Hello World, I'm Here!" Next, assume the user edited the document by deleting all of the text after "Hello World" and saved the document as a newer version. Change tracking software would compare the two documents and indicate such a change, for instance as an attachment to the second document. One common way the change tracker indicates that the text has been deleted is to display the entire sentence with a line through all of the text after "Hello World" to indicate that it is deleted.

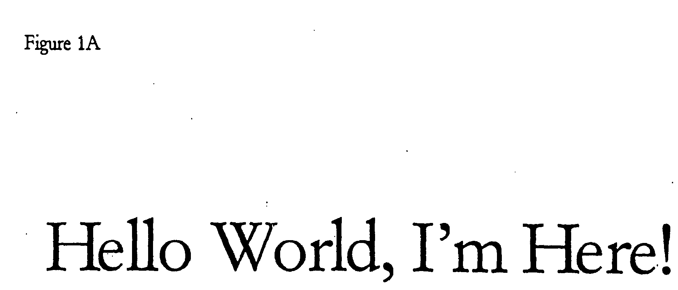

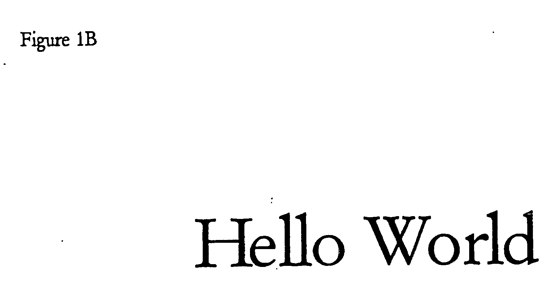

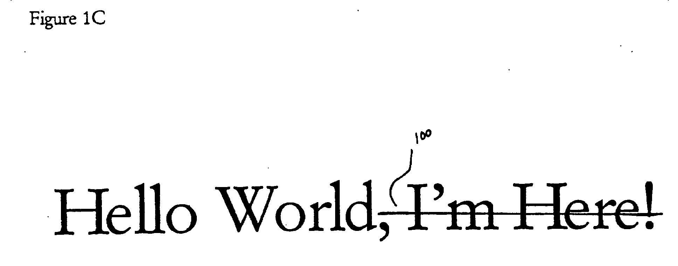

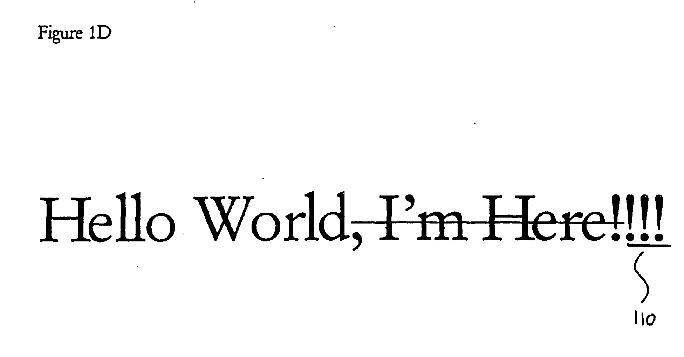

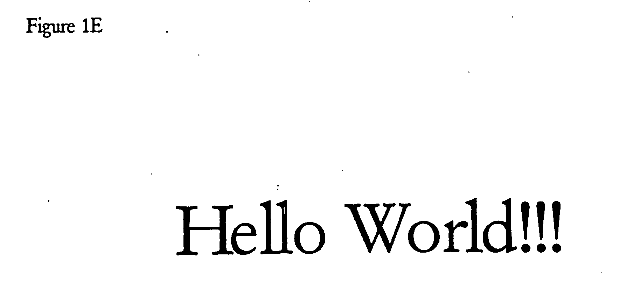

In one embodiment of the present invention, change tracking software is integrated into a disconnected device. Tracked changes on the disconnected device or general purpose computer are illustrated in Figures 1A through 1E. Figure 1A shows an initial document. In the initial document, the user entered the text "Hello World, I'm Here!" Referring now to Figure 1B, this figure shows a later version of the same document where the user has decided to delete the text after the word world in Figure 1A. Thus, the modified document only contains the term "Hello World".

Figure 1C shows how the same document appears after change tracking compares the earlier and later versions shown in Figures 1A and 1B. Line 100 appears through the text which has been removed from the later version. Line 100 is for purposes of illustration only. Other types of marks are used in change tracking software to indicate that text has been deleted. Some of these marks include brackets, underlines, and parenthesis, colored text, and others.

Suppose now that after the scenario described in Figures 1A-1C, the user then desires to add three exclamation points after the text "Hello World". In that case, an additional application of change tracking may appear as shown in Figure 1D. Underline 110 indicates that three exclamation points have been added. Note, however, that change tracking software indicates additions of text in various manners, which include brackets and parenthesis, bold text, colored text, and others. The final document, absent change tracking, appears as shown in Figure 1E. The additional exclamation points are added, the deleted text is missing, and the final phrase appears as "Hello World!!!"

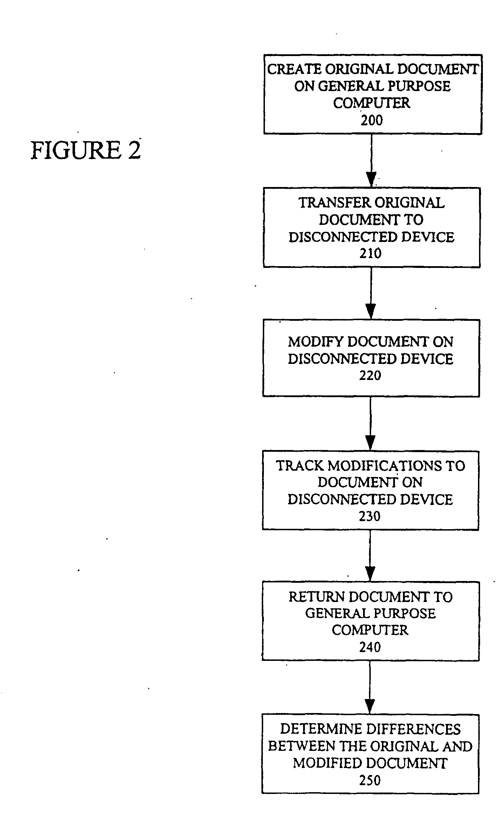

With a backdrop of what change tracking is provided above, one embodiment of the present invention operates generally in accordance with Figure 2. At step 200 an original document is created on a general purpose computer. The document can be, for instance, a word processing document. At step 210, the document is transferred to a disconnected device. Next, the document is modified on the disconnected device at step 220. Then, the modifications made to the document are tracked on the disconnected device at step 230. Thereafter, the document is returned to the general purpose computer from the disconnected device (step 240) and the differences between the original and modified document are determined (step 250).

### DATA TRANSLATION AND TRANSFER OPERATIONS

In one embodiment, the change tracking software on the general purpose computer and the change tracking software on the disconnected device are compatible. This means that the change tracking software performs its functions in the same way and changes tracked either on the disconnected device or general purpose computer can readily be transferred between the two systems without any additional software to translate the tracked changes.

In another embodiment, the change tracking software on the disconnected device and the change tracking software on the general purpose computer are not directly compatible. In this instance, computer software to perform data transfer and translation operations are implemented. The purpose of the data translation operation is to couple tracked changes which are maintained in two computer usable mediums which implement disparate protocols. The data translation operation is configured to obtain the tracked changes in a first protocol, for instance a protocol implemented by a disconnected device, and translate the tracked changes into a second protocol, for instance one implemented by a general purpose computer. In one embodiment of the present invention where a Palm Pilot PDA is used, the data transfer and translation operations are performed by a conduit.

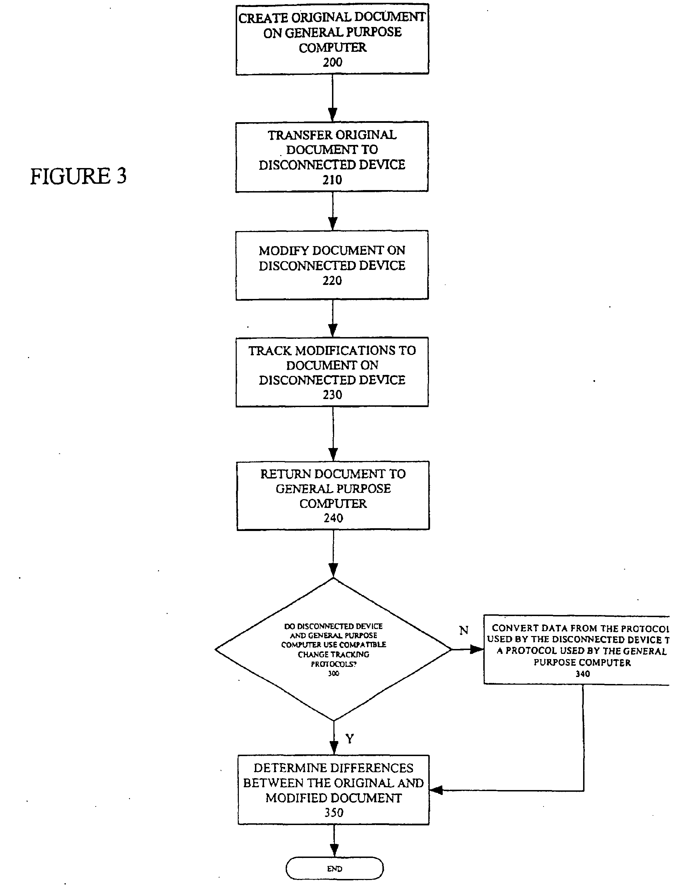

Figure 3 is a flowchart of an embodiment of the invention that uses data transfer and translation operations. At step 200 an original document is created on a general purpose computer. Next, at step 210, the document is transferred to a disconnected device. Next, the document is modified on the disconnected device at step 220. Then, the modifications made to the document are tracked on the disconnected device at step 230.

Thereafter, the document is returned to the general purpose computer from the disconnected device (step 240). Then at step 300, it is determined whether the disconnected device and the general purpose computer use compatible change tracking protocols. If the protocols are compatible, the differences between the original and modified document are determined (step 350) and the algorithm is complete. Otherwise, the data is converted from the protocol used by the disconnected device to one that can be used by the general purpose computer at step 340 before the differences between the original and modified document are determined at step 350.

### CHANGE TRACKING TAGS AND MERGE FEATURE

In one embodiment, the software with which change tracking is to be applied has built in change tracking tags and a merge feature. One example of such software is Star Office, but others can be used as well. In this embodiment, the change tracking tags are used and any changes made on the disconnected device are inserted into a database. The data stored in the database is converted to a format which is readable by the software on the general purpose computer.

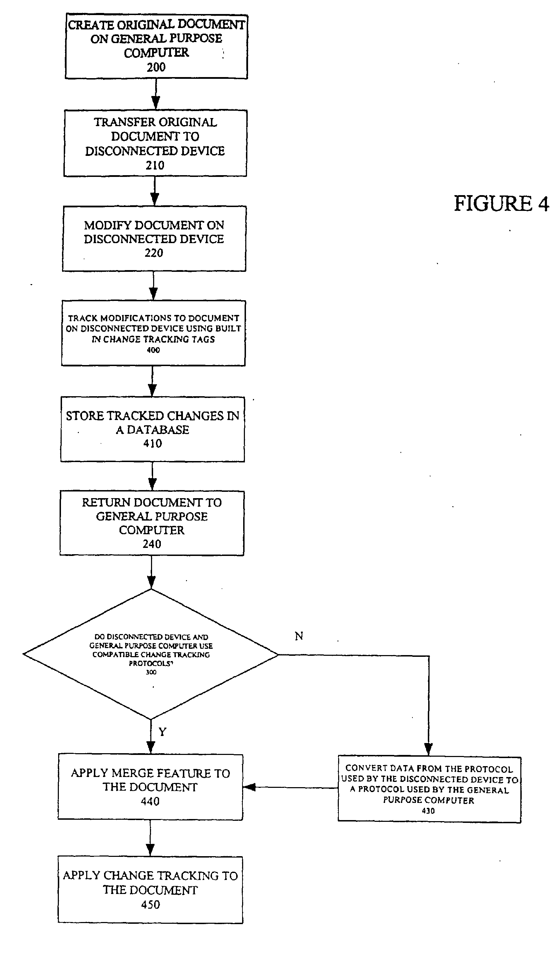

In one embodiment, for instance an embodiment that uses a PDA, the transfer of the changed document from the disconnected device to the general purpose computer is called a "hotsync". After the hotsync, the original document that existed before the transfer to the disconnected device can be merged with the changed document using the merge feature. Figure 4 is a flowchart which describes how an embodiment of a method of the present invention operates using software that has built in change tracking tags and a merge feature. At step 200 an original document is created on a general purpose computer. Next, at step 210, the document is transferred to a disconnected device. Next, the document is modified on the disconnected device at step 220. Then, the modifications made to the document are tracked on the disconnected device at step 400 using the built in change tracking tags that exist in the software. Next, at step 410, the tracked changes are stored in a database.

Then, the document is returned to the general purpose computer from the disconnected device at step 240. Next, at step 300, it is determined whether the disconnected device and the general purpose computer use compatible change tracking protocols. If the protocols are compatible, the method proceeds to step 440 where the merge feature is applied. The merge feature functions to merge the original document that existed on the general purpose computer and the document that was modified on the disconnected device. Finally, at step 450, change tracking is added to the document, which shows what text was edited in the document while it was on the disconnected device.

If it is determined that the change tracking protocols are not compatible at step 300, the data is converted from the protocol used by the disconnected device to one that can be used by the general purpose computer at step 430. Then the merge feature is applied at step 440 and at step 450 change tracking is added to the document.

For example, suppose that the original document had a large graphic that was not transferred to the disconnected device from the general purpose computer (i.e., the graphic was lost in the transfer). Next, suppose that the document was edited on the disconnected device without the graphic, but several new bullet point items were added and text was edited. When the document is transferred back to the general purpose computer, the merge feature would cause a new document to be created that had both the large graphic file, the new bullet point items, and the edited text shown as a conventional change tracker would indicate.

Thus, the one or more embodiments described in connection with Figure 4 solve several problems associated with editing a document on a disconnected device. First, information that is lost in the initial transfer to the disconnected device (the large graphic file) is restored in the merged document. Second, text that was edited on the disconnected device will appear in the merged document as tracked changes. Third, formatting information added to the document on the disconnected device that cannot be shown as WYSIWYG on the disconnected device will be displayed as WYSIWYG on the general purpose computer.

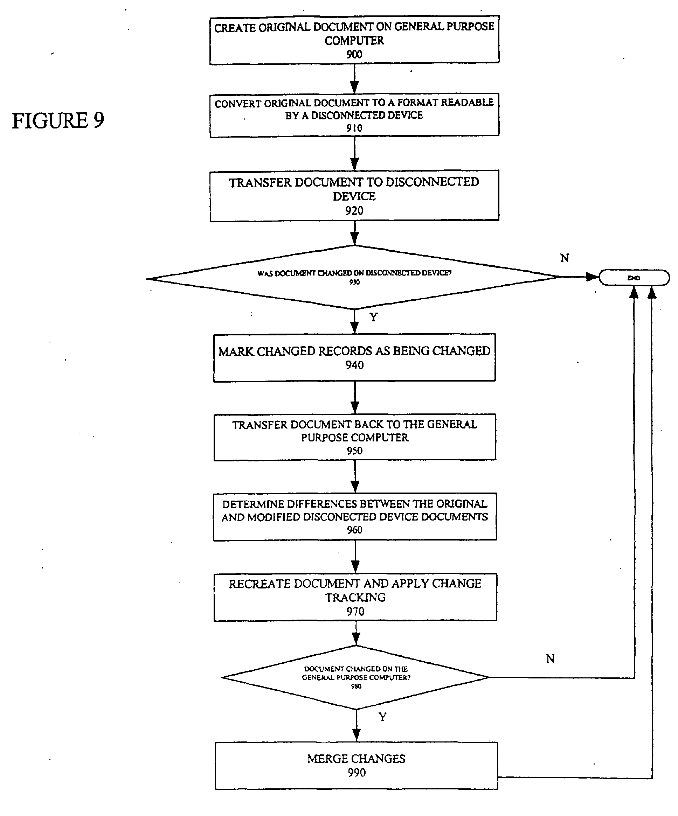

Figure 9 is another embodiment of the present invention where a merge feature is used. At step 900, an original document is created on a general purpose computer. Then, at step 910, the original document is converted into a format readable by the disconnected device. Next, both copies are saved on the general purpose computer.

Thereafter, the document created at step 910 is transferred to the disconnected device at step 920. Then, at step 930 if the document is modified on the disconnected device, changed records are marked as being changed at step 940. Next, the document is transferred back to the general purpose computer at step 950.

On the general purpose computer, the document is inspected. If there were no changed records at step 940, the process is complete. Otherwise, the transferred document is compared to the original disconnected device readable document and the differences are noted at step 960. Then, at step 970 the document is recreated using the original document and the changed disconnected device document and change tracking is applied using the original disconnected device document and the changed disconnected device document.

Then, at step 980, it is determined if the document was changed on the general purpose computer. If it was not, the process is complete. Otherwise, at step 990, the original and changed general purpose computer documents are merged noting the tracked changes.

### USER SELECTION OF TRACKED CHANGES

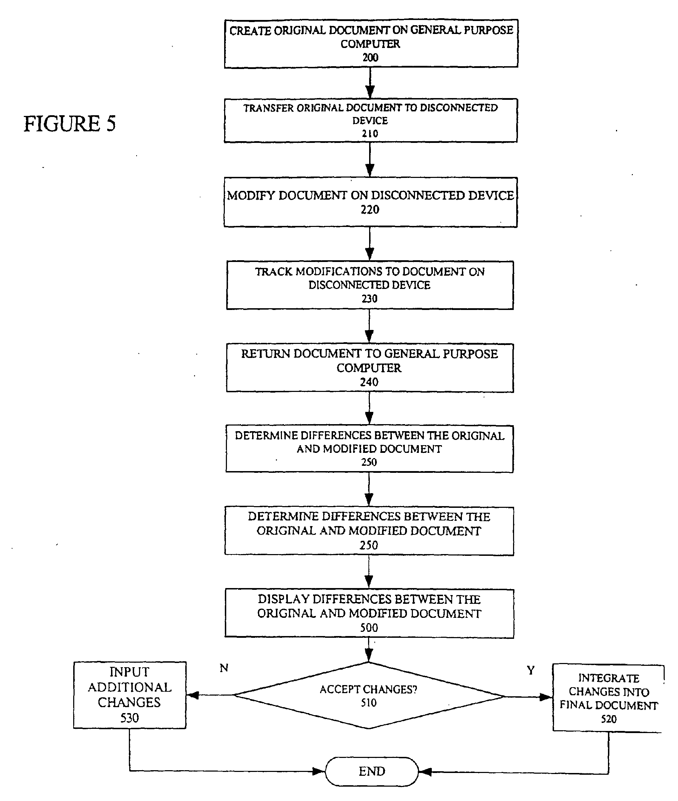

In one embodiment, after the final document is produced, the user is given the choice of whether to accept or reject the tracked changes. Alternatively, the user can change the formats as needed. Figure 5 is a flowchart of how an embodiment of a method of the present invention operates which includes an option for the user selection of tracked changes.

At step 200 an original document is created on a general purpose computer. Next, at step 210, the document is transferred to a disconnected device. Next, the document is modified on the disconnected device at step 220. Then, the modifications made to the document are tracked on the disconnected device at step 230. Next, the document is returned to the general purpose computer from the disconnected device at step 240. Thereafter, the differences between the original and modified documents are determined at step 250.

Once the differences are determined, the document which shows the differences is displayed to the user at step 500. At step 510, it is determined if the user wants to accept the changes. If the user wants to accept the changes, the changes are integrated into a final document at step 520. Otherwise, the changes are not integrated and the user can input additional changes at step 530.
Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment, a change tracker may comprise an original document configured to be created on a computer and transferred to a disconnected device; a modified document comprising said original document modified on said disconnected device and returned to said computer; and change tracking means configured to determine one or more modifications between said original document and said modified document.

Further, the change tracker may comprise change tracking computer software and means for effecting a data transfer operation.

The disconnected device may further include integrator means for determining whether to integrate said modifications into said original document, and/or may include merger means for merging the original document and the modified document.

The original document may have been created using an office productivity application and the modified document may have been changed using a companion application.

The change tracker may, e.g., comprise a PDA.

According to another embodiment, a computer program product may comprise: a computer usable medium having computer readable program code embodied therein configured to integrate change tracking with disconnected device document synchronization, said computer program product comprising: computer readable code configured to cause a computer to create an original document; computer readable code configured to cause a computer to transfer aid original document to a disconnected device; computer readable code configured to cause a computer to modify said original document on said disconnected device to form a modified document; computer readable code configured to cause a computer to return said modified document to said computer; and computer readable code configured to cause a computer to determine one or more modifications between said original document and said modified document.

According to another embodiment, a program may be provided having instructions adapted to cause data processing means to carry out the operations of the above embodiments. Further, a computer readable medium may be provided in which the program is embodied.

### EMBODIMENT OF COMPUTER EXECUTION ENVIRONMENT (HARDWARE)

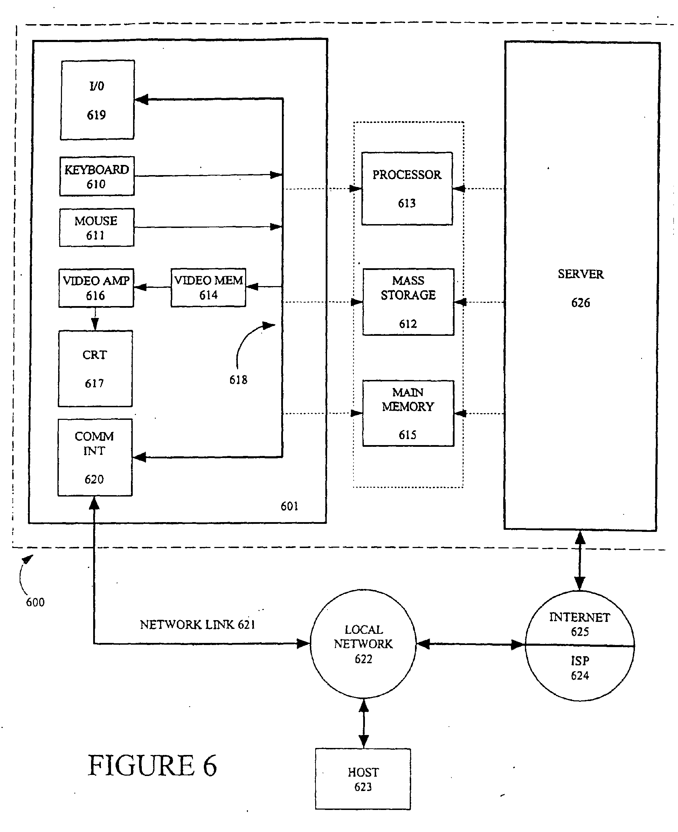

An embodiment of the invention can be implemented as computer software in the form of computer readable program code executed in a general purpose computing environment such as environment 600 illustrated in Figure 6, or in the form of bytecode class files executable within a Java™ run time environment running in such an environment, or in the form of bytecodes running on a processor (or devices enabled to process bytecodes) existing in a distributed environment (e.g., one or more processors on a network). A keyboard 610 and mouse 611 are coupled to a system bus 618. The keyboard and mouse are for introducing user input to the computer system and communicating that user input to central processing unit (CPU) 613. Other suitable input devices may be used in addition to, or in place of, the mouse 611 and keyboard 610. I/O (input/output) unit 619 coupled to bi-directional system bus 618 represents such I/O elements as a printer, A/V (audio/video) I/O, etc.

Computer 601 may include a communication interface 620 coupled to bus 618. Communication interface 620 provides a two-way data communication coupling via a network link 621 to a local network 622. For example, if communication interface 620 is an integrated services digital network (ISDN) card or a modem, communication interface 620 provides a data communication connection to the corresponding type of telephone line, which comprises part of network link 621. If communication interface 620 is a local area network (LAN) card, communication interface 620 provides a data communication connection via network link 621 to a compatible LAN. Wireless links are also possible. In any such implementation, communication interface 620 sends and receives electrical, electromagnetic or optical signals which carry digital data streams representing various types of information.

Network link 621 typically provides data communication through one or more networks to other data devices. For example, network link 621 may provide a connection through local network 622 to local server computer 623 or to data equipment operated by ISP 624. ISP 624 in turn provides data communication services through the world wide packet data communication network now commonly referred to as the "Internet" 625. Local network 622 and Internet 625 both use electrical, electromagnetic or optical signals which carry digital data streams. The signals through the various networks and the signals on network link 621 and through communication interface 620, which carry the digital data to and from computer 600, are exemplary forms of carrier waves transporting the information.
Processor 613 may reside wholly on client computer 601 or wholly on server 626 or processor 613 may have its computational power distributed between computer 601 and server 626. Server 626 symbolically is represented in Figure 6 as one unit, but server 626 can also be distributed between multiple "tiers". In one embodiment, server 626 comprises a middle and back tier where application logic executes in the middle tier and persistent data is obtained in the back tier. In the case where processor 613 resides wholly on server 626, the results of the computations performed by processor 613 are transmitted to computer 601 via Internet 625, Internet Service Provider (ISP) 624, local network 622 and communication interface 620. In this way, computer 601 is able to display the results of the computation to a user in the form of output.

Computer 601 includes a video memory 614, main memory 615 and mass storage 612, all coupled to bi-directional system bus 618 along with keyboard 610, mouse 611 and processor 613.
As with processor 613, in various computing environments, main memory 615 and mass storage 612, can reside wholly on server 626 or computer 601, or they may be distributed between the two. Examples of systems where processor 613, main memory 615, and mass storage 612 are distributed between computer 601 and server 626 include the thin-client computing architecture developed by Sun Microsystems, Inc., the palm pilot computing device and other personal digital assistants, Internet ready cellular phones and other Internet computing devices, and in platform independent computing environments, such as those which utilize the Java technologies also developed by Sun Microsystems, Inc.

The mass storage 612 may include both fixed and removable media, such as magnetic, optical or magnetic optical storage systems or any other available mass storage technology. Bus 618 may contain, for example, thirty-two address lines for addressing video memory 614 or main memory 615. The system bus 618 also includes, for example, a 32-bit data bus for transferring data between and among the components, such as processor 613, main memory 615, video memory 614 and mass storage 612. Alternatively, multiplex data/address lines may be used instead of separate data and address lines.

In one embodiment of the invention, the processor 613 is a microprocessor manufactured by Motorola, such as the 680X0 processor or a microprocessor manufactured by Intel, such as the 80X86, or Pentium processor, or a SPARC microprocessor from Sun Microsystems, Inc. However, any other suitable microprocessor or microcomputer may be utilized. Main memory 615 is comprised of dynamic random access memory (DRAM). Video memory 614 is a dual-ported video random access memory. One port of the video memory 614 is coupled to video amplifier 616. The video amplifier 616 is used to drive the cathode ray tube (CRT) raster monitor 617. Video amplifier 616 is well known in the art and may be implemented by any suitable apparatus. This circuitry converts pixel data stored in video memory 614 to a raster signal suitable for use by monitor 617. Monitor 617 is a type of monitor suitable for displaying graphic images.

Computer 601 can send messages and receive data, including program code, through the network(s), network link 621, and communication interface 620. In the Internet example, remote server computer 626 might transmit a requested code for an application program through Internet 625, ISP 624, local network 622 and communication interface 620. The received code may be executed by processor 613 as it is received, and/or stored in mass storage 612, or other non-volatile storage for later execution. In this manner, computer 600 may obtain application code in the form of a carrier wave. Alternatively, remote server computer 626 may execute applications using processor 613, and utilize mass storage 612, and/or video memory 615. The results of the execution at server 626 are then transmitted through Internet 625, ISP 624, local network 622 and communication interface 620. In this example, computer 601 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in a wide variety of computer system configurations or programming or processing environments.

Thus, change tracking integrated with disconnected device document synchronization is described in conjunction with one or more specific embodiments. The invention is defined by the claims and their full scope of equivalents.

## Claims

1. A method for integrating change tracking with disconnected device document synchronization comprising:
creating an original document on a computer;
transferring said original document to a disconnected device;
modifying said original document on said disconnected device to form a modified document;
returning said modified document to said computer; and
determining one or more modifications between said original document and said modified document.

2. The method of claim 1 wherein said step of determining further comprises:
utilizing change tracking software.

3. The method of claim 2 further comprising:
utilizing a data translation operation.

4. The method of claim 3 wherein said disconnected device is a PDA.

5. The method of claim 1, further comprising:
determining whether to integrate said modifications into said original document.

6. The method of claim 1, further comprising:
merging said original document and said modified document.

7. The method of claim 1 wherein said original document was created using an office productivity application.

8. The method of claim 1 wherein said document was modified using a companion application.

9. A change tracker comprising:
an original document configured to be created on a computer and transferred to a disconnected device;
a modified document comprising said original document modified on said disconnected device and returned to said computer;
a change tracker configured to determine one or more modifications between said original document and said modified document.

10. The change tracker of claim 9 wherein said change tracker comprises change tracking computer software.

11. The change tracker of claim 10 further comprising:
a data transfer operation.

12. The change tracker of claim 11 wherein said disconnected device comprises a PDA.

13. The change tracker of claim 9, further comprising:
an integrator configured to determine whether to integrate said modifications into said original document.

14. The change tracker of claim 9, further comprising:
a merger configured to merge said original document and said modified document.

15. The change tracker of claim 9 wherein said original document was created using an office productivity application.

16. The change tracker of claim 1 wherein said modified document was changed using a companion application.

17. A computer program product comprising:
a computer usable medium having computer readable program code embodied therein configured to integrate change tracking with disconnected device document synchronization, said computer program product comprising:
computer readable code configured to cause a computer to create an original document;
computer readable code configured to cause a computer to transfer said original document to a disconnected device;
computer readable code configured to cause a computer to modify said original document on said disconnected device to form a modified document;
computer readable code configured to cause a computer to return said modified document to said computer; and
computer readable code configured to cause a computer to determine one or more modifications between said original document and said modified document.

18. The computer program product of claim 17 wherein said computer readable code configured to cause a computer to determine further comprises:
computer readable code configured to cause a computer to utilize change tracking software.

19. The computer program product of claim 18 further comprising:
computer readable code configured to cause a computer to utilize a data transfer operation.

20. The computer program product of claim 19 wherein said disconnected device is a PDA.

21. The computer program product of claim 17, further comprising:
computer readable code configured to cause a computer to determine whether to integrate said modifications into said original document.

22. The computer program product of claim 17, further comprising:
computer readable code configured to cause a computer to merge said original document and said modified document.

23. The computer program product of claim 17 wherein said original document was created using an office productivity application.

24. The computer program product of claim 17 wherein said modified document was changed using a companion application.

25. A program having instructions adapted to carry out the method of at least one of the claims 1 - 8.

26. A computer readable medium, in which a program is embodied, where the program is to make a computer execute the method of at least one of the claims 1 - 8.
